# EUROPÄISCHE PATENTSCHRIFT

(11) **EP 1 451 514 B1**
(45) Veröffentlichungstag und Bekanntmachung des Hinweises auf die Patenterteilung: **23.03.2005**
(21) Anmeldenummer: 02791791.3
(22) Anmeldetag: 07.12.2002
(51) Int. Cl.: F27B 7/42, F27D 21/02, G01N 21/72, G01J 5/00, F23N 5/08

(54) **VERFAHREN ZUR ÜBERWACHUNG EINES BRENNVORGANGES**
METHOD FOR MONITORING A COMBUSTION PROCESS
PROCEDE DE SURVEILLANCE D'UN PROCESSUS DE COMBUSTION

(30) Priorität: 07.12.2001 DE 10160222
(43) Veröffentlichungstag der Anmeldung: 01.09.2004
(73) Patentinhaber: Powitec Intelligent Technologies GmbH, 45219 Essen (DE)
(72) Erfinder: SCHMIDT, Dirk, 45525 Hattingen (DE); BEYER, Bernd, 45219 Essen (DE); WINTRICH, Franz, 45309 Essen (DE)
(74) Vertreter: Patentanwälte Hosenthien-Held und Dr. Held
(86) Internationale Anmeldenummer: PCT/EP2002/013899
(87) Internationale Veröffentlichungsnummer: WO 2003/048667

(56) Entgegenhaltungen:
- DE-A- 2 515 807
- DE-A- 19 710 206
- DE-A- 19 950 981
- US-A- 5 997 288

## Beschreibung

Die Erfindung betrifft ein Verfahren zur Überwachung eines Brennvorgangs mit den Merkmalen des Oberbegriffs des Anspruches 1.

Aus der DE 199 50 981 A1 ist ein Drehrohrofen zum Umsetzen einer Substanz bekannt, bei welchem spektroskopische Daten des gebrannten Zementes ermittelt werden, aus deren Intensität, insbesondere derjenigen von Kalziumhydroxid, auf die Klinkerzahl (FCAO) als Maß für die Qualität des Zements geschlossen wird. Die US 5,997,288 A beschreibt ein Verfahren der eingangs genannten An zur thermischen Behandlung von Kohle in einem extern beheizten Drehrohrofen, wobei Heißgas durch die Kohle im Gegenstrom geführt und die Temperatur des Kohlenbettes im Ofen mittels an einer zentralen Lanze angeordneten Thermoelementen gemessen wird, um den Wärmeeintrag in das Kohlenbett und die Qualität der behandelten Kohle zu regeln. In der DE 25 15 807 A1 ist ebenfalls ein Verfahren der eingangs genannten Art offenbart, bei dem Erölkoks in einem Drehrohrofen thermisch behandelt werden, wobei Pyrometer die Strahlungsintensität des Koksbettes oder der Ofenwand messen.

Der vorliegenden Erfindung liegt die Aufgabe zugrunde, ein Verfahren der eingangs genannten Art zu verbessern. Diese Aufgabe wird durch ein Verfahren mit den Merkmalen des Anspruches 1 gelöst. Weitere vorteilhafte Ausgestaltungen sind Gegenstand der Unteransprüche.

Dadurch, daß für eine Regelung des Brennvorgangs der Wärmeeintrag ins Bett aus der Differenz der normierten Wärmestrahlungen der Flamme und des Bettes ermittelt und bei einer bestimmten Temperatur optimiert wird, steht ein gegenüber der spektroskopischen Messung einfacher zu ermittelndes Maß für die Qualität der umgesetzten Substanz und die darauf bauende Regelung zur Verfügung. Dies gilt insbesondere, wenn der Wärmeeintrag ins Bett bzw. die Wärmestrahlung der Flamme und des Bettes optisch erfaßt werden, also die zur Flammenbeobachtung sowieso vorhandene Kameraanordnung verwendet wird. Für eine Regelung des Brennvorgangs werden vorzugsweise die normierten Wärmestrahlungen bei einer bestimmten Temperatur möglichst in konstanter Relation gehalten.

Das Verfahren ist für alle Umsetzvorgänge einsetzbar, bei denen das Umsetzen, Verbacken, Sintern oder dergleichen der Substanz vom spezifischen Wärmeeintrag abhängt, also beispielsweise beim Brennen von Zement oder Kalk oder bei der Glasherstellung.

Im folgenden ist die Erfindung anhand eines Ausführungsbeispiels näher erläutert.

Der Innenraum eines als Drehrohrofen ausgebildeten Zementofens weist einen Bodenbereich auf, welcher als Bett, Sinterzone oder Klinkerbett bezeichnet wird. Im Bett entsteht während des Brennvorgangs der fertige Zement. Oberhalb des Bettes ist der Bereich, in welchem sich während des Brennvorgangs die Flamme ausbildet. Mittels mehrerer Wärmestrahlungssensoren, beispielsweise einer Mehrchip-CCD-Kamera, einer CMOS-Kamera oder einer Glasfaserkamera mit mehreren voneinander unabhängigen Glasfasern, jeweils mit angeschlossener Bildverarbeitung, wird die Wärmestrahlung S_{F} der Flamme, die Wärmestrahlung S_{B} des im Bett entstehenden Zementes, die Wärmestrahlung S_{z} des Zementes (Klinkers) nach der Flamme und die Wärmestrahlung S_{w} der Drehrohrofenwand an mehreren Orten und über längere Zeit hinweg erfaßt und die Daten einem Rechner zugeführt.

Die absoluten Werte der Wärmestrahlung werden dann noch normiert, und zwar die Wärmestrahlungen S_{F} und S_{w} der Flamme bzw. der Drehrohrofenwand mit der Menge und Qualitität des Brennstoffes, also dem Brennwert M_{B}, und die Wärmestrahlungen S_{B} und S_{Z} des Bettes mit der produzierten Klinlcermenge (Zementmenge) M_{Z}. Bei einer vom Rechner, beispielsweise mittels eines neuronalen Netzes, vorgenommenen Regelung wird eine Funktion dieser verscheidenen normierten Wärmestrahlungen verwendet, also

f(S_{F}/M_{B}, S_{W}/M_{B}, S_{B}/M_{Z}, S_{Z}/M_{Z}).

Der Brennvorgang wird dahingehend geregelt, daß bei einer bestimmten Temperatur eine möglichst konstante Relation zwischen diesen normierten Wärmestrahlungen erhalten bleibt.

Die Differenz zwischen der normierten Wärmestrahlung S_{F}/M_{B} der Flamme und derjenigen S_{B}/M_{Z} des Bettes bestimmt im wesentlichen den Wärmeeintrag Q_{B} ins Bett, also die dem Bett zugeführte Wärmemenge. Der FCAO-Wert, welcher ein Maß für die Qualität des Zements ist, hängt direkt von diesem (spezifischen) Wärmeeintrag Q_{B} ins Bett ab, wobei die Qualität aufgrund der Ortsabhängigkeit des Wärmeeintrags Q_{B} lokal unterschiedlich sein kann. Mit der Regelung des Brennvorgangs soll daher ein maximaler Wärmeeintrag Q_{B} ins Bett erreicht werden. Der Rechner steuert hierfür verschiedene Stellvorrichtungen an, welche die Stellgrößen des Ofens, beispielsweise die Luft-, Brennstoff-, Kalk- und Zuschlagstoffe-Zufuhr, bestimmen.

## Patentansprüche

1. Verfahren zur Überwachung eines Brennvorgangs, bei dem in einem Ofen eine in einem Bett des Ofens angeordnete Substanz unter Wärmezufuhr mittels Befeuerung durch eine Flamme umgesetzt wird, wobei mittels wenigstens eines Sensors Daten (S_{F}, S_{w}, S_{B}, S_{z}, M_{B}, M_{z}) der Flamme und/oder der Substanz im Bett erfaßt werden und aus den vom Sensor erfaßten Daten (S_{F}, S_{w}, S_{B}, S_{Z}, M_{B}, M_{Z}) der Wärmeeintrag (Q_{B}) ins Bett ermittelt und zur Qualitätsbestimmung verwendet wird, indem als Daten die Wärmestrahlungen (S_{F}, S_{w}, S_{B}, S_{Z}) der Flamme und des Bettes vom Sensor erfaßt und mittels der zugeführten und/oder produzierten Mengen (M_{B}, M_{z}) an Energie und Material normiert werden, **dadurch gekennzeichnet, daß** für eine Regelung des Brennvorgangs der Wärmeeintrag (Q_{B}) ins Bett aus der Differenz der normierten Wärmestrahlungen (S_{F}/M_{B}, S_{B}/M_{Z}) der Flamme und des Bettes ermittelt und bei einer bestimmten Temperatur optimiert wird.

2. Verfahren nach Anspruch 1, **dadurch gekennzeichnet, daß** für eine Regelung des Brennvorgangs die normierten Wärmestrahlungen (S_{F}/M_{B}, S_{W}/M_{B}, S_{B}/M_{Z}, S_{Z}/M_{Z}) bei einer bestimmten Temperatur möglichst in konstanter Relation zueiander gehalten werden.

3. Verfahren nach Anspruch 1 oder 2, **dadurch gekennzeichnet, daß** eine vorhandene Kameraanordnung als Sensor zur Erfassung der Wärmestrahlungen (S_{F}, S_{W}, S_{B}, S_{z}) der Flamme und des Bettes dient.

4. Verfahren nach einem der Ansprüche 1 bis 3, **dadurch gekennzeichnet, daß** sich während des Brennvorgangs die Flamme oberhalb des Bettes ausbildet.

## Claims

1. A method for monitoring a combustion process, in which, in a oven, a substance arranged in a bed of the oven is converted under the supply of heat by means of firing by a flame, data (S_{F}, S_{W}, S_{B}, S_{Z}, M_{B}, M_{Z}) of the flame and/or the substance in the bed being recorded by means of at least one sensor, and the input of heat (Q_{B}) into the bed is determined from the data (S_{F}, S_{W}, S_{B}, S_{Z}, M_{B}, M_{Z}) recorded by the sensor and is used for quality determination, as a result of the thermal radiations (S_{F}, S_{W}, S_{B}, S_{Z}) of the flame and of the bed being recorded as data by the sensor and normalized by means of the supplied and/or produced quantities (M_{B}, M_{Z}) of energy and material, **characterized in that** to control the combustion process the input of heat (Q_{B}) into the bed is determined from the difference between the normalized thermal radiations (S_{F}/M_{B}, S_{B}/M_{Z}) of the flame and of the bed and is optimized at a defined temperature.

2. The method as claimed in claim 1, **characterized in that** to control the combustion process the normalized thermal radiations (S_{F}/M_{B}, S_{W}/M_{B}, S_{B}/M_{Z}, S_{Z}/M_{Z}), at a defined temperature are as far as possible held in a constant relationship with respect to one another.

3. The method as claimed in claim 1 or 2, **characterized in that** an existing camera arrangement is used as sensor to record the thermal radiations (S_{F}, S_{W}, S_{B}, S_{Z}) of the flame and of the bed.

4. The method as claimed in one of claims 1 to 3, **characterized in that** during the combustion process the flame is formed above the bed.

## Revendications

1. Procédé de surveillance d'un processus de combustion, suivant lequel, dans un four, une substance disposée dans un lit du four est mise à réagir sous apport de chaleur au moyen d'un chauffage par une flamme, à l'occasion de quoi au moyen d'au moins un détecteur, des données (S_{F}, S_{W}, S_{B}, S_{Z}, M_{B}, M_{Z}) de la flamme et/ou de la substance dans le lit sont détectées et à partir des données (S_{F}, S_{W}, S_{B}, S_{Z}, M_{B}, M_{Z}) détectées par le détecteur, l'apport de chaleur (Q_{B}) dans le lit est déterminé et est utilisé pour la détermination de la qualité, dans lequel, comme données, les rayonnements thermiques (S_{F}, S_{W}, S_{B}, S_{Z}) de la flamme et du lit sont détectés par le détecteur et sont normalisés au moyen des quantités (M_{B}, M_{Z}) d'énergie et de matière apportées et/ou produites, **caractérisé par le fait que**, pour une régulation du processus de combustion, l'apport de chaleur (Q_{B}) dans le lit est déterminé à partir de la différence des rayonnements thermiques normalisés (S_{F}/M_{B}, S_{B}/M_{Z}) de la flamme et du lit et est optimisé pour une température déterminée.

2. Procédé selon la revendication 1, **caractérisé par le fait que**, pour une régulation du processus de combustion, les rayonnements thermiques normalisés (S_{F}/M_{B}, S_{W}/M_{B}, S_{B}/M_{Z}, S_{Z}/M_{Z}) sont, pour une température déterminée, maintenus le plus possible en relation constante entre eux.

3. Procédé selon l'une des revendications 1 ou 2, **caractérisé par le fait qu'**un dispositif de caméra existant sert de détecteur pour la détection des rayonnements thermiques (S_{F}, S_{W}, S_{B}, S_{Z}) de la flamme et du lit.

4. Procédé selon l'une des revendications 1 à 3, **caractérisé par le fait que**, pendant le processus de combustion, la flamme se forme au-dessus du lit.
